# EUROPÄISCHE PATENTSCHRIFT

(11) **EP 1 956 231 B1**
(45) Veröffentlichungstag und Bekanntmachung des Hinweises auf die Patenterteilung: **16.11.2016**
(21) Anmeldenummer: 08001473.1
(22) Anmeldetag: 26.01.2008
(51) Int. Cl.: F02P 5/152, F02D 35/02, G01L 23/22, F02D 41/00, F02D 41/14

(54) **Verfahren zur Klopfregelung**
Knock control method
Procédé pour la régulation du cliquetis

(30) Priorität: 08.02.2007 DE 102007007641
(43) Veröffentlichungstag der Anmeldung: 13.08.2008
(73) Patentinhaber: IAV GmbH Ingenieurgesellschaft Auto und Verkehr, 10587 Berlin (DE)
(72) Erfinder: Lezius, Ulf, 38518 Gifhorn (DE); Magnor, Olaf, Dr.-Ing., 38104 Braunschweig (DE); Schultalbers, Matthias, 38536 Meinersen (DE)

(56) Entgegenhaltungen:
- EP-A2- 1 473 452
- WO-A1-2007/013663
- DE-B4- 10 356 133
- US-A- 5 386 722
- US-B1- 6 240 900

## Beschreibung

### Technisches Gebiet

Die Erfindung betrifft ein Verfahren zur Klopfregelung.

### Stand der Technik

Klopfregelungen in Ottomotoren erfüllen im Wesentlichen zwei Aufgaben, die Erkennung und Verhinderung von unkontrolliert auftretendem Klopfen und den Betrieb des Motors nahe der Klopfgrenze zur Lelstungsmaximierung.

Die Klopfregelung basiert üblicherweise auf der Erkennung klopfender Arbeitsspiele. Für diese Klopfregelung werden beispielsweise Messungen des Zylinderdrucks (beispielsweise aus der DE 195 25 240 C2 bekannt), des Körperschalles (beispielsweise aus der DE 10 2004 057 261 A1 bekannt) oder Ionenstromsignale (beispielsweise aus der DE 196 45 572 C2 bekannt) verwendet.
Die entsprechenden Messsignale werden über Hochpass- oder Bandpassfilter gefiltert, wobei die Filterfrequenzen auf die typischen Resonanzfrequenzen des Brennraums abgestimmt sind. Aus den gefilterten Signalen werden Kenngrößen zur Einschätzung der Klopfstärke, beispielsweise Betragsmaximum, Betragsmittel oder quadratisches Mittel, abgeleitet.

Die Kenngrößen werden in einem für das Auftreten von Klopfen relevanten Zeitfenster berechnet. Zur Detektion von klopfenden Verbrennungen und gleichzeitiger Bildung eines Klopfmaßes wird die gebildete Kenngröße mit einer Schwelle verglichen.

Als Stellgröße zur Klopfregelung dient beispielsweise der Zündwinkel. Eine Spätverstellung des Zündwinkels reduziert die Klopfneigung, führt aber gleichzeitig zur Verringerung des erzeugten Drehmoments und des Wirkungsgrades. Der aktuelle Klopfwinkel ergibt sich direkt aus dem Zündwinkel des vorhergehenden Arbeitsspiels. In jedem Regelungsschritt wird der Zündwinkel um einen festen Betrag nach "früh" in Richtung der Klopfgrenze verschoben. Nimmt die Klopfstärke einen Wert größer als Null an, wird der Zündwinkel zur Reduzierung der Klopfneigung um einen Wert nach "spät" verschoben.

Die Funktionsprinzipien der Klopfregelung beruhen darauf, dass nach als klopfend eingestuften Verbrennungen der Zündwinkel in Richtung "spät" verschoben wird. Solange keine klopfenden Verbrennungen auftreten, wird der Zündwinkel nach "früh" verschoben. Dies stellt eine Form der Extremwertregelung dar, die keine Information darüber verarbeitet, wie groß der Abstand des Zündwinkels zur Klopfgrenze eigentlich ist. Bei nicht klopfenden Betriebszuständen ist die Klopfintensität nahezu gleich Null und damit unabhängig vom Abstand zur Klopfgrenze. Um die Häufigkeit klopfender Verbrennungen einzuschränken, müssen bekannte Klopfregelungen daher sehr kostenintensiv ausgelegt werden, so dass der Zündwinkel nach Klopfereignissen relativ weit nach "spät" verstellt und anschließend nur sehr langsam zurück nach "früh" verstellt wird. Diese Algorithmen zur Klopfregelung betreiben den Zündwinkel somit im Mittel etwas unterhalb der Klopfgrenze, was zu einer Verringerung des maximal möglichen Drehmoments führt.

Die beschriebenen Prinzipien der Klopfregelung sind im Zeitbereich definiert und basieren hauptsächlich auf einer Auswertung der Klopfintensität, so dass unterhalb der Klopfschwelle keine Information über den Abstand zur Klopfgrenze herangezogen wird.

Gemäß dem Dokument EP1473452A2 ist es weiterhin Stand der Technik, für eine Klopfregelung ein Zylinderdruckmerkmal mit einer Klopfgrenze zu vergleichen, wobei das Zylinderdruckmerkmal aus dem Zylinderdruckverlauf geschätzt und der Zylinderdruckverlauf aus einem Drehzahlsignal ermittelt wird.

Gemäß dem Dokument US6240900B1 ist es weiterhin Stand der Technik, Klopfschwellen beim Betrieb einer Brennkraftmaschine anzupassen.

Gemäß dem Dokument US5386722A ist ein Verfahren zur statistischen Erkennung der Klopfgrenze beim Betrieb einer Brennkraftmaschine Stand der Technik.

Gemäß dem Dokument WO2007013663A1 ist es Stand der Technik, beim Betrieb einer Brennkraftmaschine mittels eines Zyiinderdrucksensors Parameter der Verbrennung zu bestimmen und zur Steuerung der Brennkraftmaschine zu verwenden.

### Aufgabe der Erfindung

Der Erfindung liegt die Aufgabe zugrunde, die aus dem Stand der Technik bekannten Nachteile zu vermeiden.

### Lösung der Aufgabe

Die Aufgabe wird durch ein Verfahren gemäß Anspruch 1 gelöst.

### Vorteile der Erfindung

Das erfindungsgemäße Verfahren führt eine Klopfregelung mit einer Adaption einer Klopfgrenze durch, Ziel der Adaption ist es, die ermittelte oder vorgegebene Klopfgrenze der realen, d. h, tatsächlichen, Klopfgrenze anzunähern.
Für die Adaption der Klopfgrenze wird eine Klopferkennung eines gemessenen Körperschallsignals zugrundegelegt, so dass die bekannte Klopfgrenze anhand der erfassten Klopfereignisse der realen Klopfgrenze angepasst wird. Bei der Klopfregelung wird für einen Klopfregler einer Stellgröße ein Zylinderdruckmerkmal mit der Klopfgrenze verglichen, so dass der Klopfregler den aktuellen Vergleich für die Regelung der Stellgröße berücksichtigt. Der Abstand des Istwertes des Zylinderdruckmerkmals zur Klopfgrenze wird ermittelt und in die Regelung eingebunden. Der Abstand zur Klopfgrenze stellt eine quantifizierbare Regelabweichung dar.
Dessen Berücksichtigung bietet den Vorteil, dass der Klopfregler die Stellgröße gezielt an die Klopfgrenze heranregelt, so dass die Stellgröße früher, d. h. zeitlich schneller, und im Mittel dichter unterhalb der Klopfgrenze gegenüber den bekannten Verfahren betrieben werden kann. Damit kann die Häufigkeit von klopfenden Verbrennungen auf einem vergleichbar niedrigen Niveau bleiben.
Ein Betrieb der Stellgröße dichter an der Klopfgrenze kann eine Steigerung des erzeugten Drehmoments bei gleichbleibendem Kraftstoffelnsatz bewirken.

In einer vorteilhaften Ausführungsform ist die Klopfgrenze aufgrund des Vergleichs und der Klopferkennung adaptierbar. Bei dem Vergleich kann der betragsmäßige Abstand zwischen der Klopfgrenze und dem Zylinderdruckmerkmal ermittelt werden. Dieser Abstand und die Klopferkennung können eine Grundlage für eine Adaption und einen Betrag, um den die Klopfgrenze verändert wird, bilden.

In einer vorteilhaften Ausführungsform ist das Zylinderdruckmerkmal das Zylinderdruckmaximum, welches sich für eine Abstandsbestimmung in dem Vergleich zwischen Zylinderdruckmaximum und Klopfgrenze eignet.

In einer vorteilhaften Ausführungsform ist eine Stellgröße der Zündwinkel. Ist bei der Klopfregelung das Zylinderdruckmerkmal das Zylinderdruckmaximum, so kann für den Klopfregler der annähernd lineare Zusammenhang zwischen Zylinderdruckmaximum und Zündwinkel berücksichtigt werden. Der lineare Zusammenhang kann mit einer Geraden beschrieben werden, wobei die Differenz des neuen Zündwinkels zu dem alten Zündwinkel der Division der Differenz des Zylinderdruckmaximums und des Druckwerts der Klopfgrenze zu der Steigung der Geraden entspricht. Somit besteht die Möglichkeit, mit diesem Zusammenhang den Zündwinkelwert zu regeln. Der lineare Zusammenhang kann zudem für weitere Regelungsfunktionen dienen, die hier nicht aufgeführt werden.

In einer vorteilhaften Ausführungsform ermittelt ein Kurbelwinkelgeber das zyklusaufgelöste Drehzahlsignal. Mittels des Kurbelwinkelgebers wird die Winkelgeschwindigkeit und/oder die Wirikelbeschleurligung ermittelt.
Zur Ermittlung des Zylinderdruckverlaufs aus einer Kurbelwinkelgeschwindigkeit einer Kurbelwelle können das aus der DE 103 56 133 B4 bekannte Verfahren oder die aus der EP 1 567 757 B1 bekannte Vorrichtung und Verfahren oder Fehrenbach, H. "Berechnung des Brennraumdruckverlaufs aus der Kurbelwellen-Winkelgeschwindigkeit von Verbrennungsmotoren", Fortschritts-Berichte VDI-Reihe 6, Nr. 255, Düsseldorf, VDI-Verlag, 1991 oder Gheorghiu, Victor "Simulatlonsmodeile von Verbrennungsmotoren für Echtzeitanwendungen", Haus der Technik e.V., Tagung Nr. E-30-202-056-8, Essen, 1998 zugrunde gelegt werden.
Dieser ermittelte Zylinderdruckverlauf eignet sich nicht zur Erkennung klopfender Arbeitsspiele, da hierbel eine zu geringe Frequenz erzielt wird. Dennoch eignet sich dieser Zylinderdruckverlauf für die Schätzung von Zylinderdruckmerkmalen.
Weiterhin kann das Zylinderdruckmerkmal beispielsweise mittels Verfahren der künstlichen Intelligenz oder statistischen Analyseverfahren geschätzt werden.
Ein Verfahren der künstlichen Intelligenz ist beispielsweise ein Feedforward-Netz. Dieses Netz verfügt über mehrere Eingangsneuronen, die die mit Hilfe des Kurbelwinkelgebers ermittelten Werte der Winkelbeschleunigung der Kurbelwelle einlesen. Während eines Arbeitstaktes werden die Beschleunigungswerte des betreffenden Zylinders verwendet. Das Ausgangsneuron gibt das interessierende Zylinderdruckmerkmal aus. Das Feedforward-Netz wird beispielsweise mit Hilfe von Messdaten eines mit Zylinderdrucksensoren ausgerüsteten Motors angelernt und kann dann im Fahrzeugbetrieb das gelernte Zylinderdruckmerkmal schätzen. Als Lernverfahren hierfür kann beispielsweise ein Backpropagation-Verfahren eingesetzt werden.

Die Ermittlung des Zylinderdruckverlaufs aus dem zyklusaufgelösten Drehzahlsignal bietet den Vorteil eines Verzichts auf kostenintensive Drucksensoren, Zudem kann bereits vorhandene Sensorik, beispielsweise der Kurbelwinkelgeber, genutzt werden.

Die Schätzung einzelner Zylinderdruckmerkmale an Stelle von Zeitverläufen des Zylinderdrucks ergibt einen geringeren technischen Aufwand.

### Zeichnung

Es zeigt:

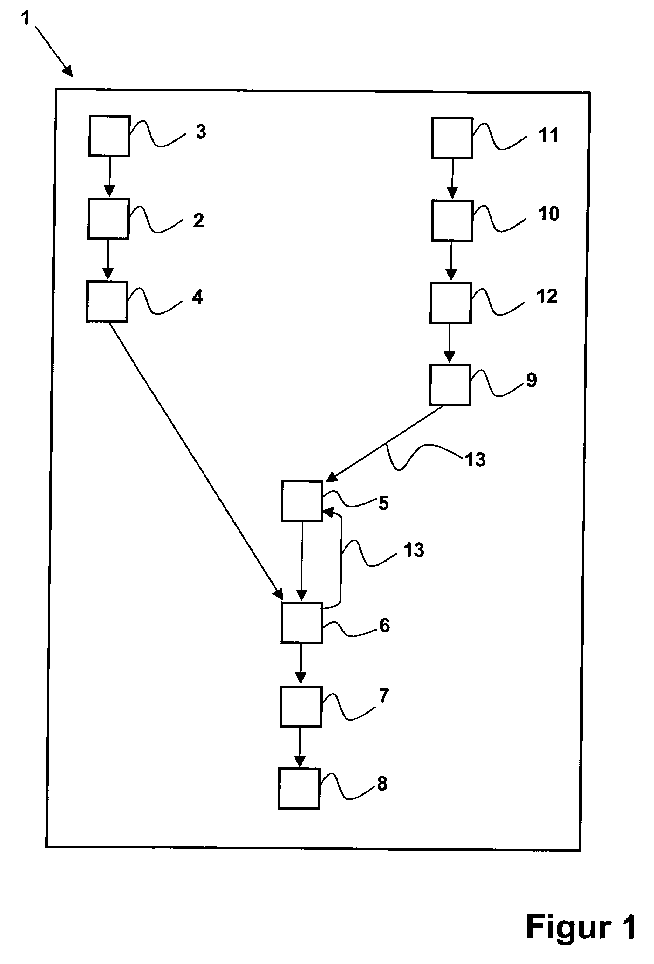

- Figur 1:: ein Blockschaltbild des erfindungsgemäßen Verfahrens.

In Figur 1 ist ein Blockschaltbild einer erfindungsgemäßen Klopfregelung 1 dargestellt.

Ein Zylinderdruckverlauf 2 wird aus einem zyklusaufgelösten Drehzahlsignal 3 eines nicht dargestellten Verbrennungsmotors ermittelt. Beispielsweise kann das Drehzahlsignal 3 aus der Kurbelwinkelgeschwindigkeit eines Kurbelwinkelgebers ermittelt werden. Zur Ermittlung des Zylinderdruckverlaufs 2 aus der Kurbelwinkelgeschwindigkeit des Kurbelwinkelgebers kann das aus der DE 103 56 133 B4 bekannte Verfahren eingesetzt werden.

Aus dem Zylinderdruckverlauf 2 wird ein Zylinderdruckmerkmal 4 geschätzt. Das Zyllnderdruckmerkmal 4 ist beispielsweise das Zylinderdruckmaximum, der maximale Anstieg des Zylinderdruckverlaufs, die Lage, d. h. Kurbelwinkel, des Zylinderdruckmaximums, der maximale Anstieg des Zylinderdrucks, die Lage, d. h. Kurbelwinkel, des maximalen Anstiegs des Zylinderdrucks, der indizierte Mitteldruck der Huchdruckschleife, oder die Lage der Verbrennungshalbwertzeit d. h. der Kurbelwinkel, bei dem exakt die Hälfte des zugeführten Kraftstoffs verbrannt ist. Die Schätzung kann beispielsweise mit Verfahren der künstlichen Intelligenz, z. B. künstliche neuronale Netze, oder statistischen Analyseverfahren, z. B. multiple Regression, erfolgen.

Das Zylinderdruckmerkmal 4 wird mit einer Klopfgrenze 5, die ein Druckwert ist, verglichen. Der Vergleich 6 kann beispielsweise die Bestimmung des betragsmäßigen Abstands zwischen Zylinderdruckmerkmal 4 und der Klopfgrenze 5 sein. Der Vergleich 6 ist ein kontinuierliches Abstandsmaß und eine Eingangsgröße für einen Klopfregler 7. Aufgrund der Eingangsgröße regelt der Klopfregler 7 als Ausgangsgröße eine oder mehrere Stellgrößen 8 des Verbrennungsmotors. Eine Stellgröße 8 ist beispielsweise der Zündwinkel, das Verdichtungsverhältnis oder der Ladedruck.

Die Klopfgrenze 5 ist über eine Klopferkennung 9 adaptierbar, wobei die Klopferkennung 9 auf einem Körperschallsignal 10 basiert. Das Körperschallsignal 10 wird von einem oder mehreren Körperschallsensoren 11, die an dem Verbrennungsmotor angeordnet sind, erfasst. Das Körperschallsignal 10 wird über einen Bandpass 12 gefiltert.
Zusätzlich zur Klopferkennung 9 kann auch der Vergleich 6 zur Adaption 13 der Klopfgrenze 5 herangezogen werden.

Wird zur Adaption 13 der Klopfgrenze 5 die Klopferkennung 9, d. h. nur die Klopferkennung 9 und nicht der Vergleich 6, zugrunde gelegt, so wird bei einer "positiven" Klopferkennung 9 die Klopfgrenze 5 um einen bestimmen Betrag gesenkt, bei einer "negativen" Klopferkennung 9 wird die Klopfgrenze 5 um einen bestimmten Betrag erhöht.
In welchem Fall eine Klopferkennung 9 "positiv" oder "negativ" ist, kann beispielsweise die in einer bestimmten Zeitdauer erfasste Anzahl von Klopfereignissen sein.

Wird die Klopfgrenze 5 mit der Klopferkennung 9 und dem Vergleich 6 adaptiert, so kann die Klopfgrenze 5 dann um einen bestimmten Betrag gesenkt werden, wenn eine "positive" Klopferkennung 9 und ein "negativer" Vergleich 6 vorliegt. Der Vergleich 6 ist "negativ", wenn die Klopfgrenze 5 einen deutlich größeren Wert im Vergleich zu dem Zylinderdruckmerkmal 4, beispielsweise dem Zylinderdruckmaximum, aufweist.
Die Klopfgrenze 5 wird um einen bestimmten Betrag erhöht, wenn eine "negative" Klopferkennung 9 und ein "positive" Vergleich 6 vorliegt, wobei der Vergleich 6 "positiv" ist, wenn die Klopfgrenze 5 einen deutlich niedrigeren Wert im Vergleich zu dem Zylinderdruckmerkmal 4 aufweist.
Die Klopfgrenze 5 wird nicht verändert, d. h. weder gesenkt noch erhöht, unabhängig von einer "positiven" oder "negativen" Klopferkennung 9, wenn der Wert der Klopfgrenze 5 etwa dem des Zylinderdruckmerkmals 4 entspricht, also weder ein "positiver" noch ein "negativer" Vergleich 6 vorliegt bzw. dieser aufgrund der Stochastik des Messsignals in einem definierbaren Zeitraum die Klopfgrenze 5 mit geringer Häufigkeit unterschreitet, wobei gleichzeitig ein Klopfereignis durch die akustische Klopferkennung mittels Körperschallsensoren 11 detektiert wird.

Beispielsweise kann die Einteilung des Vergleichs 6 von der Klopfgrenze 5 und dem Zylinderdruckmerkmal 4 in einen "negativen" oder "positiven" Vergleich 6 anhand eines für jedes Arbeitsspiel bestimmbaren Schwellwertes erfolgen. So liegt beispielsweise ein "negativer" Vergleich 6 dann vor, wenn der Wert des Zylinderdruckmerkmals 4 weniger als 90% des Werts der Klopfgrenze 5 beträgt; in diesem Fall beträgt für einen "negativen" Vergleich 6 der Schwellwert 90%.

Wenn der Vergleich 6, d. h. der Abstand, des Zylinderdruckmerkmals 4 zur aktuell gültigen Klopfgrenze 5 bekannt ist, so kann der Klopfregler 7 die Stellgröße 8 derart festlegen, dass ein bestimmter Sicherheitsabstand zur Klopfgrenze 5 eingehalten wird.
Der benötigte Sicherheitsabstand kann beispielsweise aus einer Häufigkeitsverteilung einer bestimmten Anzahl von zeitlich zurückliegenden Werten des Vergleichs 6 berechnet werden.

Auf diese Weise wird sichergestellt, dass trotz zyklischer Schwankungen der Verbrennung lediglich ein akzeptabler Anteil der Arbeitsspiele klopfend verläuft.

Durch die Adaptierbarkeit ist die Klopfgrenze 5 dynamisch, so dass die Stellgröße 8, beispielsweise der Zündwinkel, früher und dichter unterhalb der realen Klopfgrenze mit dem Klopfregler 7 betrieben werden kann. Die Klopfregelung 1 umfasst somit eine Möglichkeit zur Anpassung der Klopfgrenze 5 und einen Klopfregler 7 für die Stellgröße 8. Bei jedem Arbeitsspiel kann der betragsmäßige Abstand des Zylinderdruckmerkmals 4 zur Klopfgrenze 5 ermittelt und für die Adaption 13 der Klopfgrenze 5 und für den Klopfregler 7 berücksichtigt werden. Gleichseitig stellt der verwendete Klopfregler 7 eine Verbesserung der bekannten Verfahren dar, da durch die Verwendung des Zylinderdruckmerkmals 4 und die Berechnung des Abstands zur Klopfgrenze 5 eine verbesserte Regelung nahe an der adaptierbaren Klopfgrenze erfolgt.

### Bezugszeichenliste

- 1: Klopfregelung
- 2: Zylinderdruckverlauf
- 3: Drehzahlsignal
- 4: Zylinderdruckmörkmal
- 5: Klopfgrenze

- 6: Vergleich
- 7: Klopfregler
- 8: Stellgröße
- 9: Klopferkennung
- 10: Körperschallsignal

- 11: Körperschallsensor
- 12: Bandpass
- 13: Adaption

## Patentansprüche

1. Verfahren zur Klopfregelung (1) für einen Verbrennungsmotor, wobei
- ein Zylinderdruckverlauf (2) aus einem zyklusaufgelösten Drehzahlsignal (3) des Verbrennungsmotors ermittelt wird, und
- aus dem Zylinderdruckverlauf (2) ein Zylinderdruckmerkmal (4) geschätzt wird, und
- das Zylinderdruckmerkmal (4) mit einer Klopfgrenze (5) verglichen wird, und
- ein Klopfregler (7) aufgrund des Vergleichs (6) eine oder mehrere Stellgrößen (8) des Verbrennungsmotors regelt, und
- die Klopfgrenze (5) aufgrund einer Klopferkennung (9) mittels eines gemessenen Körperschallsignals (10) und aufgrund des Vergleichs (6) adaptiert wird.

2. Verfahren nach Anspruch 1, **dadurch gekennzeichnet, dass** das Zylinderdruckmerkmal (4) ein Zylinderdruckmaximum ist.

3. Verfahren nach mindestens einem der vorhergehenden Ansprüche, **dadurch gekennzeichnet, dass** eine Stellgröße (8) ein Zündwinkel ist.

4. Verfahren nach mindestens einem der vorhergehenden Ansprüche, **dadurch gekennzeichnet, dass** das zyklusaufgelöste Drehzahlsignal (3) mittels eines Kurbelwinkelgebers ermittelt wird.

5. Verfahren nach Anspruch 4, **dadurch gekennzeichnet, dass** mittels des Kurbelwinkelgebers eine Winkelgeschwindigkeit ermittelt wird.

6. Verfahren nach Anspruch 4 oder 5, **dadurch gekennzeichnet, dass** mittels des Kurbelwinkelgebers eine Winkelbeschleunigung ermittelt wird.

7. Verfahren nach mindestens einem der vorhergehenden Ansprüche, **dadurch gekennzeichnet, dass** das Zylinderdruckmerkmal (4) mittels eines Verfahrens der künstlichen Intelligenz aus der Drehzahl (3) des Verbrennungsmotors ermittelbar ist.

8. Verfahren nach mindestens einem der vorhergehenden Ansprüche, **dadurch gekennzeichnet, dass** das Zylinderdruckmerkmal (4) mittels eines statistischen Analyseverfahrens aus der Drehzahl (3) des Verbrennungsmotors ermittelbar ist.

## Claims

1. Method for knock regulation (1) for an internal combustion engine, wherein
- a cylinder pressure profile (2) is determined from a cycle-resolved rotational speed signal (3) of the internal combustion engine, and
- a cylinder pressure feature (4) is estimated from the cylinder pressure profile (2), and
- the cylinder pressure feature (4) is compared with a knock threshold (5), and
- a knock regulator (7) regulates one or more control variables (8) of the internal combustion engine on the basis of the comparison (6), and
- the knock threshold (5) is adapted on the basis of knock detection (9) by way of a measured body-borne noise signal (10) and on the basis of the comparison (6).

2. Method according to Claim 1, **characterized in that** the cylinder pressure feature (4) is a cylinder pressure maximum.

3. Method according to at least one of the preceding claims, **characterized in that** a control variable (8) is an ignition angle.

4. Method according to at least one of the preceding claims, **characterized in that** the cycle-resolved rotational speed signal (3) is determined by way of a crank angle sensor.

5. Method according to Claim 4, **characterized in that** an angular speed is determined by way of the crank angle sensor.

6. Method according to Claim 4 or 5, **characterized in that** an angular acceleration is determined by way of the crank angle sensor.

7. Method according to at least one of the preceding claims, **characterized in that** the cylinder pressure feature (4) can be determined from the rotational speed (3) of the internal combustion engine by way of an artificial intelligence method.

8. Method according to at least one of the preceding claims, **characterized in that** the cylinder pressure feature (4) can be determined from the rotational speed (3) of the internal combustion engine by way of a statistical analysis method.

## Revendications

1. Procédé de régulation du cliquetis (1) pour un moteur à combustion interne, dans lequel
- l'allure de la pression dans les cylindres (2) est déterminée à partir d'un signal de régime (3) du moteur à combustion interne résolu par le cycle, et
- une caractéristique de pression dans les cylindres (4) est évaluée à partir de l'allure de la pression dans les cylindres (2) et
- la caractéristique de pression dans les cylindres (4) est comparée avec une limite de cliquetis (5), et
- un régulateur de cliquetis (7) régule, sur la base de la comparaison (6), une ou plusieurs grandeurs de réglage (8) du moteur à combustion interne, et
- la limite de cliquetis (5) est adaptée, sur la base d'une reconnaissance de cliquetis (9), au moyen d'un signal de bruit de structure mesuré (10) et sur la base de la comparaison (6).

2. Procédé selon la revendication 1, **caractérisé en ce que** la caractéristique de pression dans les cylindres (4) est une pression maximale dans les cylindres.

3. Procédé selon au moins l'une quelconque des revendications précédentes, **caractérisé en ce qu'**une grandeur de réglage (8) est un angle d'allumage.

4. Procédé selon au moins l'une quelconque des revendications précédentes, **caractérisé en ce que** le signal de régime résolu par le cycle (3) est déterminé au moyen d'un capteur d'angle de vilebrequin.

5. Procédé selon la revendication 4, **caractérisé en ce qu'**au moyen du capteur d'angle de vilebrequin, une vitesse d'angle est déterminée.

6. Procédé selon la revendication 4 ou 5, **caractérisé en ce qu'**au moyen du capteur d'angle de vilebrequin, une accélération d'angle est déterminée.

7. Procédé selon au moins l'une quelconque des revendications précédentes, **caractérisé en ce que** la caractéristique de pression dans les cylindres (4) peut être déterminée au moyen d'un procédé d'intelligence artificielle à partir du régime (3) du moteur à combustion interne.

8. Procédé selon au moins l'une quelconque des revendications précédentes, **caractérisé en ce que** la caractéristique de pression dans les cylindres (4) peut être déterminée au moyen d'un procédé d'analyse statistique à partir du régime (3) du moteur à combustion interne.
